# FASCICULE DE BREVET EUROPEEN

(11) **EP 1 522 478 B1**
(45) Date de publication et mention de la délivrance du brevet: **10.10.2007**
(21) Numéro de dépôt: 04023656.4
(22) Date de dépôt: 05.10.2004
(51) Int. Cl.: B60T 13/573, B60T 13/569

(54) **Servomoteur d'assistance pneumatique au freinage à course morte réduite et système de freinage comportant un tel servomoteur**
Unterdruckbremskraftverstärker mit verkürztem Leerweg und Bremssystem mit einem solchen Verstärker
Vacuum brake booster with reduced dead stroke and brake system incorporating such booster

(30) Priorité: 06.10.2003 FR 0311696
(43) Date de publication de la demande: 13.04.2005
(73) Titulaire: ROBERT BOSCH GMBH, 70442 Stuttgart (DE)
(72) Inventeur: Simon Bacardit, Juan, 08013 Barcelone (ES)
(74) Mandataire: Hurwic, Aleksander Wiktor

(56) Documents cités:
- FR-A- 2 696 143
- FR-A- 2 812 257

## Description

La présente invention se rapporte principalement à un servomoteur d'assistance pneumatique au freinage à course morte réduite et à un système de freinage comportant un tel servomoteur.

Il est connu de l'état de la technique un dispositif de freinage à course morte réduire comportant un maître-cylindre actionné par une tige de commande actionnée par un conducteur, l'action du conducteur étant amplifiée par un servomoteur d'assistance pneumatique permettant de réduire la course de la pédale nécessaire à obtention d'une action de freinage.

Le servomoteur de type connu décrit par exemple dans le document FR 2 696 143 comporte un enveloppe dans laquelle est montée à coulissement étanche une jupe divisant l'espace intérieur de l'enveloppe en une chambre à basse pression et une chambre à pression variable.
La jupe comporte un passage central dans lequel est montée un piston pneumatique muni d'une valve à trois voies commandée par la tige de commande mettant en communication la chambre à basse pression et la chambre de travail au repos et isolant la chambre à basse pression de la chambre de travail et mettant la chambre de travail en communication avec une source de fluide à basse pression.

La jupe est montée mobile axialement par rapport au piston pneumatique sur une certaine course en début de freinage. Par conséquent, lorsque le conducteur appuie sur la pédale de frein la chambre de travail est isolée de la chambre à basse pression et se remplit de fluide pneumatique à haute pression. Du fait du différentiel de pressions entre la chambre à basse pression et la chambre de travail, la jupe se déplace en direction de la chambre à basse pression sans emporter le piston pneumatique, par conséquent le conducteur n'a pas à enfoncer d'avantage la pédale pour maintenir l'alimentation de la chambre de travail en fluide pneumatique à haute pression.
Le déplacement de la jupe est transmis à un piston primaire d'un maître-cylindre, provoquant la fermeture des clapets du maître-cylindre et une montée en pression au niveau des freins.

Au delà d'une certaine course déterminée, la jupe vient en appui sur une partie radialement externe du piston pneumatique, leurs mouvements sont alors liés. A partir de cet instant, le conducteur doit enfoncer d'avantage la tige de commande pour obtenir une augmentation de l'intensité de freinage. Mais il n'aura pas « vu à la pédale de frein » la course nécessaire à la fermeture des clapets du maître-cylindre qui ne produit pas de montée en pression dans les freins, appelée aussi course morte.

FR 2812257 décrit un telle servomoteur de freinage avec les caractéristiques techniques du préambule de la revendication 1.

Ce dispositif appelé dispositif de course morte masquée puisqu'elle masque les courses mortes au conducteur, donne entière satisfaction, mais fait toujours l'objet de recherche pour le simplifier afin d'en réduire sa complexité, d'en améliorer la facilité de montage et également d'en réduire son prix de revient. En effet la jupe est d'une forme très complexe puisqu'elle contourne le piston pneumatique et nécessite une réalisation par emboutissage en plusieurs passent, ce qui est long et coûteux.

C'est par conséquent un but de la présente invention d'offrir un dispositif de freinage à faible course d'actionnement de structure simple et facilement adaptable au dispositif connu et acceptant également l'intégration de moyens d'assistance au freinage d'urgence.

C'est également un but de la présente invention d'offrir un dispositif de freinage à faible course d'actionnement de montage simple et de prix de revient modéré.

Les buts précédemment énoncés sont atteints par un servomoteur d'assistance pneumatique au freinage comportant une jupe apte à coulisser librement par rapport à un piston pneumatique sur une course déterminée, un ressort de rappel du piston pneumatique en position repos, ledit piston étant en appui sur une plaque annulaire fixe par rapport au piston, la jupe étant interposée entre la plaque annulaire et le piston, et la jupe venant en contact de ladite plaque annulaire lorsque la jupe a parcouru la course déterminée.

En d'autres termes, le mouvement axial du piston du servomoteur selon la présente invention, permettant de gérer le niveau de freinage par l'intermédiaire de la valve trois voies, est commandé par une unique pièce annulaire fixe par rapport au piston.

La présente invention a principalement pour objet un servomoteur d'assistance pneumatique au freinage comportant une enveloppe d'axe longitudinale formée par une première et une deuxième coquilles, raccordées par leurs extrémités radialement externes, dans laquelle est monté à coulissement étanche une jupe d'axe longitudinal , ladite jupe divisant l'espace intérieur de l'enveloppe en une chambre avant à basse pression et en une chambre arrière à pression variable, un piston pneumatique d'axe longitudinal monté dans un orifice central de ladite jupe, un ressort de rappel du piston pneumatique en position repos étant monté dans la chambre à basse pression entre la première coquille et une plaque annulaire disposée dans la chambre à basse pression sensiblement perpendiculairement à l'axe longitudinal et reliée rigidement au piston pneumatique par des bras axiaux traversant la jupe, une valve trois voies actionnée par une tige de commande étant montée dans un passage longitudinal percé dans le piston pneumatique, ladite tige de commande étant reliée par une première extrémité longitudinale à une pédale de frein et une deuxième extrémité de ladite tige de commande étant reçue dans une cavité de réception pratiquée dans une première extrémité longitudinale d'un plongeur, une deuxième extrémité longitudinale du plongeur opposée à la première extrémité du plongeur étant guidé dans le piston pneumatique, ledit plongeur comportant une surface transversale d'application de l'effort de la tige de commande à un piston d'un maître-cylindre par l'intermédiaire d'un dispositif de réaction, ladite jupe étant apte à coulisser axialement relativement au piston pneumatique sur une course déterminée dans une première phase d'une action de freinage, ladite jupe transmettant un effort d'assistance pneumatique au piston hydraulique du maître-cylindre par sa partie centrale, caractérisé en ce que lorsque la jupe a parcouru ladite course déterminée, ladite jupe emporte le piston pneumatique par l'intermédiaire de ladite plaque annulaire .

La présente invention a également pour objet un servomoteur caractérisé en ce que le piston pneumatique est sensiblement cylindrique et est monté à coulissement étanche dans une extrémité longitudinale de la jupe orientée vers la pédale.

La présente invention a également pour objet un servomoteur caractérisé en ce que ladite extrémité longitudinale de la jupe orientée vers la pédale comporte une cheminée de diamètre intérieur sensiblement égal au diamètre extérieur du piston pneumatique .

La présente invention a également pour objet un servomoteur caractérisé en ce que la jupe transmet l'effort d'assistance au piston du maître-cylindre par l'intermédiaire d'un élément annulaire en appui contre la jupe, ladite partie annulaire comportant une première partie radialement externe en appui contre la jupe, une deuxième partie radialement médiane en appui contre une face avant du piston pneumatique et une troisième partie radialement interne en appui contre une queue du piston du maître-cylindre.

La présente invention a également pour objet un servomoteur caractérisé en ce que les bras axiaux sont au nombre de quatre répartis angulairement de manière régulière et traversent la jupe par l'intermédiaire de lumières pratiquées dans la deuxième partie médiane du premier élément annulaire .

La présente invention a également pour objet un servomoteur caractérisé en ce qu'un moyen élastique est monté entre la première partie radialement externe de l'élément annulaire et la plaque annulaire.

La présente invention a également pour objet un servomoteur caractérisé en ce que ledit moyen élastique est un ressort hélicoïdal tronconique dont la base de plus grand diamètre est en appui sur la plaque annulaire .

La présente invention a également pour objet un servomoteur caractérisé en ce qu'une gorge annulaire est prévue dans la plaque annulaire pour recevoir l'extrémité de plus grand diamètre du ressort tronconique .

La présente invention a également pour objet un servomoteur caractérisé en ce que la troisième partie centrale de l'élément annulaire est de forme tubulaire d'axe longitudinal et s'étend en direction du maître-cylindre et en ce que ladite queue de piston comporte une cavité munie d'un fond dans laquelle vient en appui une extrémité de la troisième partie centrale du premier élément annulaire de forme tubulaire.

La présente invention a également pour objet un servomoteur caractérisé en ce que une extrémité du tube en appui contre le fond de la cavité est conformée en rotule.

La présente invention a également pour objet un servomoteur caractérisé en ce que l'étanchéité entre la paroi extérieure du piston pneumatique et la jupe est réalisée par un joint torique monté dans une gorge pratiquée dans la paroi du piston pneumatique .

La présente invention a également pour objet un servomoteur caractérisé en ce que le palpeur est guidé axialement dans le piston pneumatique par un rétrécissement annulaire formé dans la paroi intérieure du piston pneumatique .

La présente invention a également pour objet un servomoteur caractérisé en ce que le dispositif de réaction comporte un élément flottant interposé entre une deuxième extrémité longitudinale du plongeur et un piston d'un maître-cylindre.

La présente invention a également pour objet un servomoteur caractérisé en ce que le dispositif de réaction comporte également une cage d'extension longitudinale maximale dans laquelle est monté un moyen élastique monté en réaction entre un anneau en appui contre une portée annulaire de l'élément flottant et une bague monté dans un cavité annulaire pratiquée dans le piston pneumatique, ladite bague comportant un orifice pour le passage d'une extrémité longitudinale de l'élément flottant, ladite bague et ledit anneau étant reliés par un manchon dans lequel l'anneau est apte à coulisser en direction du plongeur.

La présente invention a également pour objet un servomoteur caractérisé en ce que le dispositif de réaction comporte également un disque de réaction disposé dans la chambre en appui par une partie radialement externe d'une première face contre le piston pneumatique et par une deuxième face contre une face formant une première extrémité dudit élément flottant, ladite face étant porté par un disque solidaire de l'élément flottant et en ce qu'un jeu est prévu entre le disque rigide et une deuxième partie centrale du disque de réaction .

La présente invention a également pour objet un servomoteur caractérisé en ce qu'une membrane d'étanchéité annulaire est d'une part pincée entre la première et la deuxième coquilles, et d'autre part surmoulée sur une extrémité radialement externe de la jupe .

La présente invention a également pour objet un dispositif de freinage comportant un maître-cylindre raccordé de manière hydraulique à des freins disposés au niveau de roues d'un véhicule automobile et un servomoteur interposé entre le maître-cylindre et une tige de commande déplacé au moyen d'une pédale de frein, ledit servomoteur transmettant un effort appliqué à la pédale et appliquant un effort d'assistance pneumatique à un piston du maître-cylindre caractérisé en ce que ledit servomoteur est un servomoteur selon la présente invention.

La présente invention a pour avantage de réduire les efforts radiaux appliqués à la queue du piston du maître-cylindre.

La présente invention sera mieux comprise à l'aide de la description qui va suivre et des figures fournies en annexe sur lesquelles l'avant et l'arrière correspondent respectivement à la gauche et à la droite des dessins et pour lesquelles :
- la figure 1 est une vue en coupe longitudinale d'un premier mode de réalisation d'un dispositif de freinage selon la présente invention ;
- les figures 2 et 3 sont des vues de détails agrandis de la figure 1 ;
- la figure 4 est une vue en coupe longitudinale d'un deuxième mode de réalisation d'un dispositif de freinage selon la présente invention ;
- la figure 5 est une vue d'un détail agrandi de la figure 4.

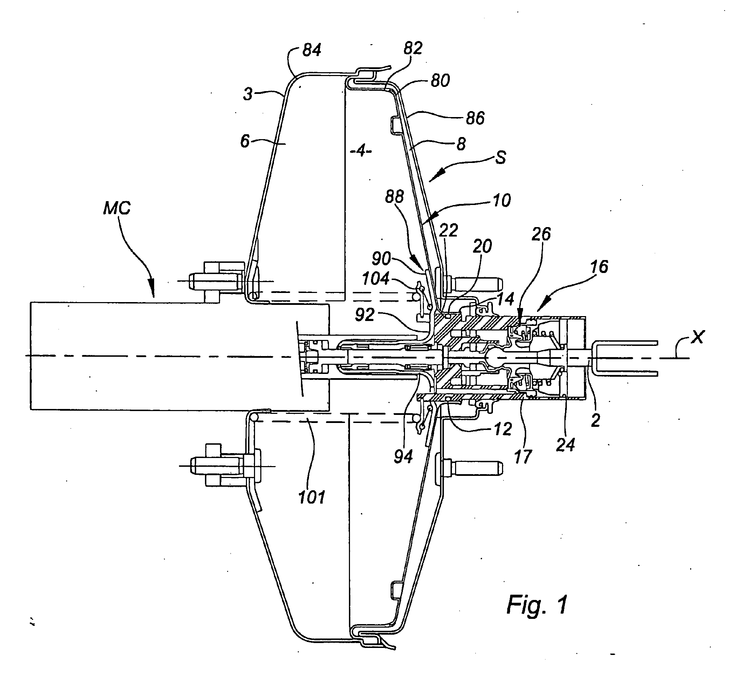

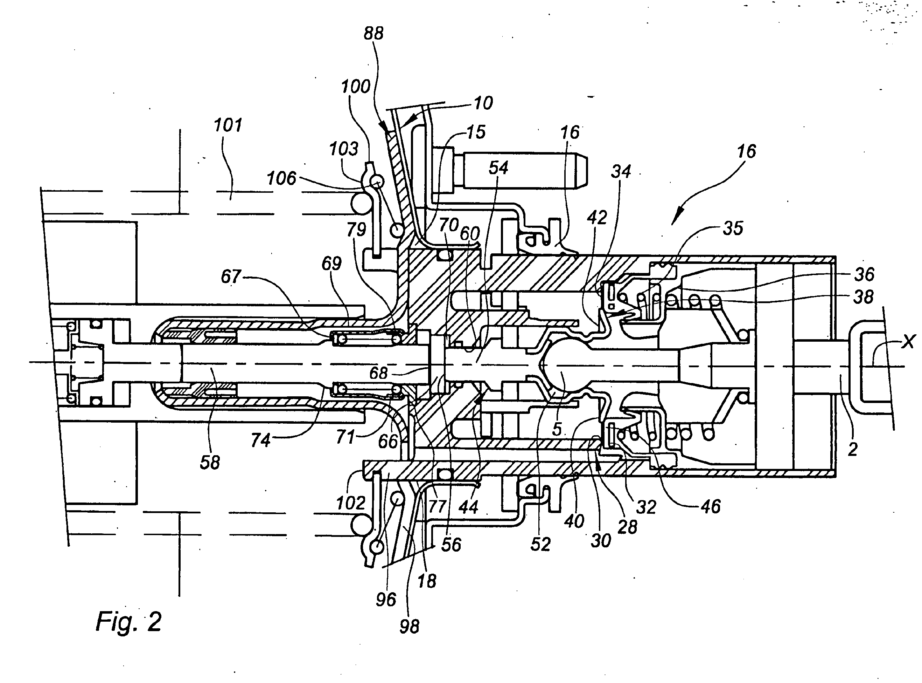

Les mêmes références seront utilisées pour les mêmes éléments ayant la même fonction pour les figures 1, 2 3, 4 et 5.

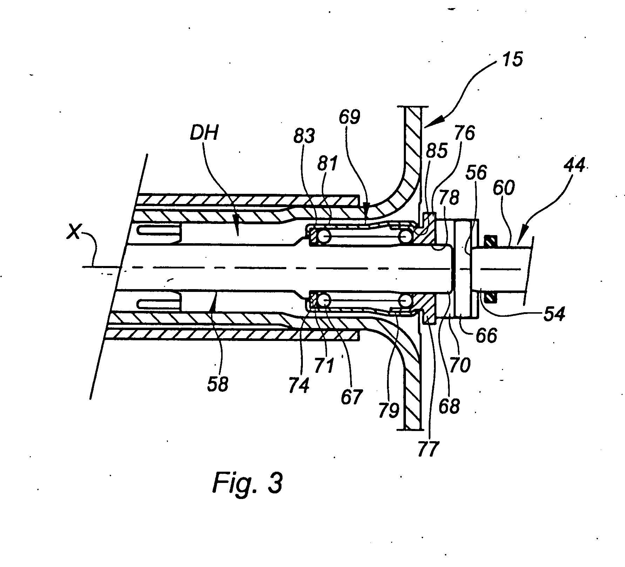

Sur les figures 1, 2 et 3, on peut voir un premier mode de réalisation d'un dispositif de freinage selon la présente invention d'axe longitudinal X comportant un servomoteur S d'assistance pneumatique au freinage et un maître-cylindre MC disposé à une première extrémité axiale du servomoteur opposée à une deuxième extrémité axiale du servomoteur orientée du côté d'une tige de commande 2 reliée à une pédale de frein (non représentée).

Le servomoteur comporte une enveloppe 3 d'axe X définissant un volume 4 divisé en une chambre à basse pression 6 raccordée en permanence à une source de basse pression ou chambre avant et en une chambre à pression variable 8 ou chambre arrière, par une jupe 10 montée à coulissement étanche dans l'enveloppe 3. La jupe 10 comporte un orifice central 12 bordé axialement vers la tige de commande 2 par une cheminée 14 et dans laquelle est montée à coulissement étanche une première extrémité axiale 15 d'un piston pneumatique 16 d'axe X s'étendant également axialement en direction de la tige de commande et coulissant de manière étanche dans l'enveloppe 4 au moyen d'un joint à lèvre 19

Le diamètre intérieur de la cheminée est égal au diamètre extérieur de la première extrémité 15 du piston pneumatique de manière à assurer un contact sensiblement plan entre la cheminée et la paroi 18 de la première extrémité 15 du piston 16 améliorant le guidage de la jupe 10.
L'étanchéité entre la cheminée 14 et une paroi radialement externe 18 du piston 16 est réalisée, dans l'exemple représentée par un joint torique 20 monté dans une gorge 22 pratiqué dans la paroi 18 du piston 16.

Le piston pneumatique 16 est formé d'un corps 17 sensiblement cylindrique, percé d'un passage 24 traversant dans lequel est monté une valve trois voies 26 actionnée par la tige de commande 2.

La valve trois voies 26 comporte un clapet d'équilibrage 28 mettant en communication la chambre avant 6 et la chambre arrière 8. Le clapet d'équilibrage 28 comporte un siège de clapet 30 formé par une portée annulaire pratiquée dans la paroi intérieure du passage 24 et un obturateur 32 formé par une première partie radialement externe d'une face annulaire 34 perpendiculaire à l'axe X, d'un élément en élastomère à section transversale en U monté fixe dans le corps 17 du piston 16. Un moyen élastique 35, dans l'exemple représenté un ressort hélicoïdal, est monté en appui en arrière de la face plane 34 et un appui annulaire 36 fixe dans le corps du piston 16 afin de confirmer l'application de l'obturateur 32 sur le siège de clapet 30.

La valve comporte un clapet 38 d'admission mettant en communication la chambre arrière 8 avec la source de fluide pneumatique à haute pression, dans l'exemple considéré il s'agit de l'environnement à pression atmosphérique. Le clapet d'admission 38 comporte un siège de clapet 40 annulaire porté par une première extrémité axiale arrière 42 d'un plongeur 44 et un obturateur 46 formé par une deuxième partie radialement interne de la face annulaire 34.

Le plongeur 44 reçoit dans une cavité de réception 52 pratiquée dans la première extrémité arrière 42 une extrémité avant 50 de la tige de commande 2 conformée en rotule. Le siège de clapet 40 du clapet d'admission 38 borde la cavité de réception 52. Le plongeur comporte à une deuxième extrémité axiale avant 54 opposée à la première extrémité 42 une surface transversale 56, appelée palpeur, destinée à transmettre l'effort appliqué à la tige de commande par le conducteur au maître-cylindre et l'effort appliqué par le maître-cylindre en réaction au conducteur.

La deuxième extrémité axiale 54 est guidée axialement par un rétrécissement annulaire 60 formé par le corps 17 du piston 15 et de diamètre intérieur égal au diamètre extérieur de l'extrémité avant 54 du plongeur 44.
La deuxième extrémité avant 54 débouche dans une chambre 70 de diamètre supérieur au diamètre extérieur de l'extrémité avant 54 du plongeur 44.
Un élément flottant 58 d'axe X est en appui contre le palpeur 56 du plongeur 44 et fait partie d'un dispositif de réaction hydraulique DH disposé dans une queue 62 d'un piston 64 du maître-cylindre.

Dans l'exemple représenté, un disque rigide 66 de diamètre extérieur égal au diamètre de la chambre 70, est avantageusement interposé entre la deuxième extrémité axiale 54 du plongeur 44 et une deuxième extrémité arrière 68 de l'élément flottant 58.

Un ressort 67 est monté dans une cage cylindrique 69 d'extension longitudinale maximale déterminant la charge du ressort, comportant un anneau 71 contre lequel vient en appui une première extrémité avant du ressort et une bague 76 percée d'un orifice 78 pour le passage de l'extrémité arrière 68 de l'élément flottant 58, contre laquelle vient en appui une deuxième extrémité arrière du ressort. L'anneau 71 est destiné à venir en appui contre un portée annulaire 74 en saillie de la périphérie de l'élément flottant 58. La bague 76 est destinée à être montée par une première extrémité arrière dans un logement annulaire 77 bordant l'extrémité avant de la chambre 70. La bague 76 comporte à une deuxième extrémité avant une extension cylindrique 79 orientée vers le maître-cylindre formant un moyen de réception et de retenue transversale de l'extrémité arrière du ressort.

La cage comporte également un manchon cylindrique 81 raccordant la bague 76 et l'anneau 71. Dans l'exemple représenté le manchon comporte à une extrémité avant une portée annulaire 83 s'étendant radialement vers l'axe et formant appui pour l'anneau 71 et est sertie par une deuxième extrémité arrière sur la périphérie de l'extension cylindrique 79 de la bague. 76. Avantageusement la bague 76 comporte un décrochement radial 85 au niveau du raccord entre la face avant de la bague et l'extension cylindrique 79 sur lequel vient s'accrocher la deuxième extrémité arrière du manchon. L'anneau 71 est apte à coulisser dans le manchon en direction du plongeur.

L'étanchéité entre la chambre avant et la chambre arrière entre une extrémité radialement externe 80 de la jupe 10 et l'enveloppe 4 est réalisée au moyen d'une membrane annulaire 82 fixée à la jupe et à l'enveloppe, se déroulant lors du déplacement de la jupe dans l'enveloppe.
La membrane annulaire 82 est par exemple pincée entre une première et une deuxièmes coquilles 84,86 formant l'enveloppe et surmoulé e sur l'extrémité radialement externe 80 de la jupe.

La membrane annulaire est réalisée de manière avantageuse en élastomère, par exemple en caoutchouc.

Selon la présente invention, la jupe est mobile axialement par rapport au piston 16 sur une course déterminée correspondant à la distance séparant une face avant de la jupe en position repos et une face arrière d'une plaque annulaire 100 liée rigidement au piston annulaire et disposé dans la chambre avant entre la jupe et la première coquille 84. L plaque annulaire 100 est fixée rigidement à une extrémité 102 avant de bras axiaux 96 en saillie de la face avant du piston pneumatique en direction du maître-cylindre. Les bras axiaux sont avantageusement au nombre de quatre, répartis angulairement de manière régulière autour de l'axe X et traversant des lumières 98 pratiquées dans un élément annulaire 88 en appui contre la jupe.

L'élément annulaire 88 est disposé dans la chambre avant en appui par une première partie radialement externe 90 contre la jupe, par une deuxième partie radialement médiane 92 contre la face avant du piston 16 et par une troisième partie radialement interne 94 contre la queue de piston du maître-cylindre. La troisième partie 94 transmet l'effort d'assistance fourni par la jupe au piston du maître-cylindre.

La plaque annulaire 100 forme d'une part un appui par une première face pour une première extrémité axiale d'un ressort de rappel 101 du piston 16 en position repos monté en appui entre la première coquille et la plaque annulaire 100.

D'autre part, la plaque annulaire forme également par une deuxième face un appui pour un moyen élastique 104 de rappel de la jupe en position repos, par exemple un ressort hélicoïdal , avantageusement tronconique de conicité orientée vers la tige de commande 2, monté entre l'élément annulaire 88 et la plaque annulaire 100.

De manière avantageuse, une gorge annulaire 106 de réception d'une première spire du ressort 104 est prévue dans la plaque annulaire 100.

La gorge annulaire 106 de réception du ressort tronconique 104 est avantageusement réalisé par emboutissage formant alors sur la face avant de la plaque annulaire un bourrelet annulaire 103 de retenue transversale du ressort de rappel 101. La jupe 10 est également ramenée en position repos par l'intermédiaire du ressort 104 transmettant le déplacement de la plaque annulaire 100 à l'élément annulaire 88.

De manière connue, la jupe est rappelée dans sa position de repos par les ressorts de rappel du maître-cylindre, cependant il est préférable de réduire la charge desdits ressorts pour des raisons de sécurité. Par conséquent on ajoute le ressort de rappel 104. Cependant un servomoteur ne comportant pas de ressort de rappel exclusivement de la jupe ne sort pas du cadre de la présente invention.

La plaque annulaire est montée avantageusement par un montage à baïonnette , la périphérie radialement interne de la plaque annulaire 100 et l'extrémité avant des bras comportent des encoches aptes à coopérer les unes avec les autres lors d'une rotation déterminé de la plaque annulaire 100 par rapport au bras 96 du piston 16 , mais un montage par encliquetage est envisageable.

Nous allons maintenant décrire le fonctionnement du servomoteur selon la présente invention.
Lorsque la tige de commande est enfoncée selon l'axe X dans la direction de la flèche, le clapet d'équilibrage 28 se ferme, isolant la chambre avant de la chambre arrière et le clapet d'alimentation s'ouvre, permettant l'alimentation en fluide pneumatique à haute pression de la chambre arrière.

Du fait de la différence de pressions régnant entre la chambre avant et la chambre arrière, la jupe se déplace selon la flèche dans l'enveloppe 4 et par rapport au piston 16 qui reste immobile. La jupe emporte le premier élément annulaire 88. Le ressort 104 est alors comprimé par le rapprochement de l'élément annulaire 88 et de la plaque annulaire 100. Au delà d'une certaine course, l'élément annulaire 88 vient en butée contre la plaque annulaire 100, les mouvements de la jupe 10 et du piston 16 sont alors liés.

Le déplacement du piston 10 permet alors au conducteur de réguler le niveau de freinage en enfonçant plus ou moins la pédale de frein.

La course libre C de la jupe 10 par rapport au piston est choisie avantageusement de manière à ce qu'elle corresponde à la course morte du maître-cylindre, c'est-à-dire à la course nécessaire du piston dans le maître-cylindre pour obtenir le début de la montée en pression du liquide de frein dans les freins. Mais il est bien entendu que le choix d'une course C supérieure ou inférieure à la course morte du maître-cylindre selon la sensation à la pédale que l'on souhaite obtenir, ne sort pas du cadre de la présente invention.

Par conséquent, le conducteur ne ressent à la pédale que la course nécessaire à la fermeture du clapet d'équilibrage et à l'ouverture du clapet d'admission et ne ressent pas la course morte du maître-cylindre. La confort du conducteur est alors augmenté, puisqu'il a la sensation d'un freinage immédiat.

De manière avantageuse, la troisième partie centrale 94 de l'élément annulaire 88 est formé d'un tube 108 formant tige de poussée et venant s'appuyer dans le fond d'une cavité 106 pratiquée dans la queue de piston.

Le tube 108 de l'élément annulaire 88 comporte une première extrémité axiale 110 en appui dans le fond de la cavité 106 en forme de rotule de manière à limiter les efforts transversaux appliqués à la queue de piston réduisant alors les risques de détérioration du maître-cylindre dans le cas d'une non coaxialité parfaite entre le servomoteur et le maître-cylindre.

L'élément flottant 58 est monté dans le tube 108, un passage 112 étant prévu à l'extrémité 110 du tube en appui contre le fond de la cavité 106 pour permettre le passage de l'élément flottant 58.

Le dispositif des figures 1, 2 et 3 procure au conducteur une sensation à la pédale très sportive. En effet la réaction retransmise au conducteur par le dispositif de réaction DH donne la sensation d'un freinage très nerveux. Cependant un certain nombre de conducteurs préfère une sensation plus souple.

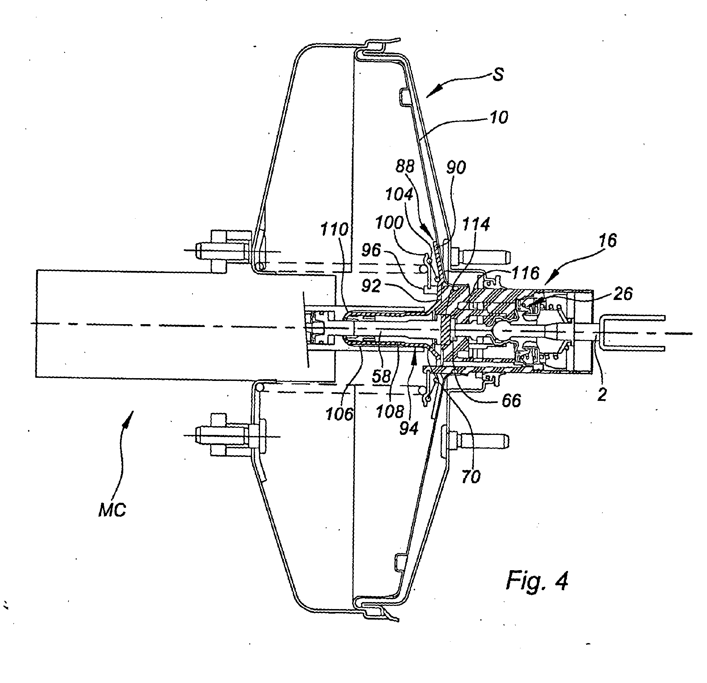

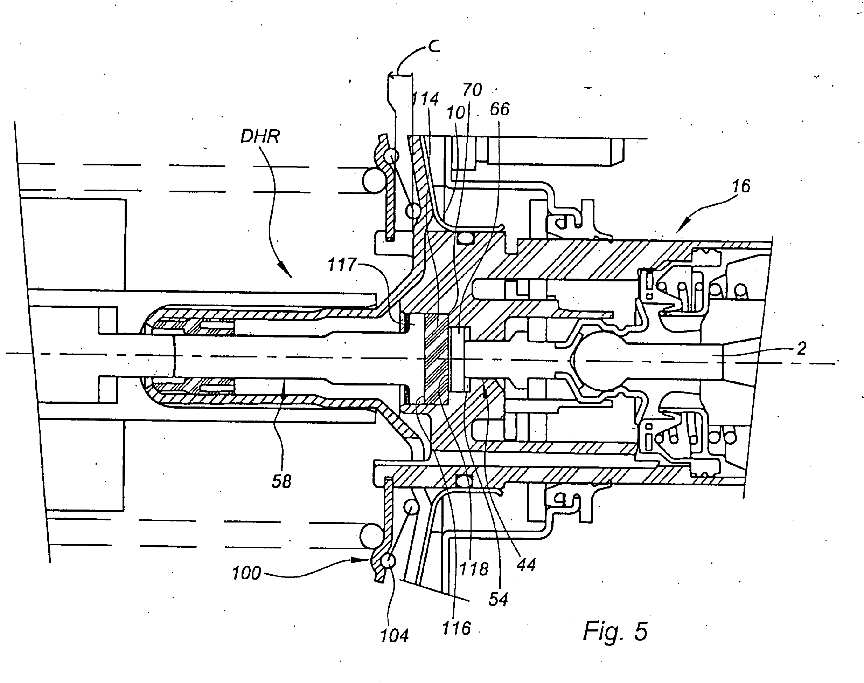

Sur les figures 4 et 5, on peut voir un deuxième mode de réalisation dans lequel la sensation à la pédale est optimisé de manière à s'adapter à des conducteurs préférant une sensation de freinage plus classique. Pour cela le dispositif de réaction DHR comporte un disque de réaction 114 en matériau sensiblement incompressible disposé entre le disque rigide 66 et l'extrémité arrière de l'élément flottant dans la chambre 70. Le disque de réaction est en appui par une partie radialement externe 116 de sa face arrière contre le piston de réaction et par sa face avant contre une face d'un disque coaxial à l'axe X solidaire de l'extrémité arrière de l'élément flottant 58. Un jeu est prévu entre le disque rigide 66 et une partie centrale 118 de la face arrière du disque de réaction et détermine le saut du servomoteur.

Le disque de réaction compose un premier effort appliqué par le plongeur, un deuxième effort appliqué par le piston pneumatique sur la partie radialement externe 116 de la face arrière du disque de réaction et l'effort de réaction appliqué par l'élément flottant 58.
La sensation à la pédale ressentie par le conducteur se rapproche de la sensation ressentie avec un servomoteur classique ne comportant qu'un disque de réaction en appui par sa face avant sur une extrémité longitudinale arrière de la tige de poussée, en supprimant cependant la sensation de course morte du maître-cylindre.

Le maître-cylindre est avantageusement un maître-cylindre tandem comportant un premier et un deuxième circuits hydrauliques munis respectivement d'un piston primaire et un piston secondaire coulissant de manière étanche dans le corps du maître-cylindre, le piston primaire recevant l'effort appliqué à la pédale et l'effort d'assistance fourni par la jupe.

Il est bien entendu que l'on pourrait envisager de réaliser la jupe et l'élément annulaire fixes l'un par rapport à l'autre par exemple par soudure, ou en une seule pièce.

On a bien réalisé un servomoteur de conception simple permettant d'améliorer de manière sensible la sensation à la pédale du fait de la course morte au maître-cylindre, de plus le servomoteur selon la présente invention permet de manière simple d'offrir une sensation pédale plus ou moins sportive selon le souhait du constructeur automobile.

De plus le dispositif de freinage selon la présente invention de par sa structure simple permet une intégration rapide et ne nécessitant que peu de modifications de moyens d'assistance au freinage d'urgence, assurant par exemple un maintien de la pression dans le maître-cylindre même après un relâché partiel de la pédale de frein.

La présente invention s'applique principalement à l'industrie du freinage pour véhicule automobile, et en particulier pour véhicule particulier.

## Revendications

1. Servomoteur d'assistance pneumatique au freinage comportant une enveloppe (4) d'axe longitudinale (X) formée par une première et une deuxième coquilles (84,86) raccordées par leurs extrémités radialement externes, dans laquelle est monté à coulissement étanche une jupe (10) d'axe longitudinal (X), ladite jupe divisant l'espace intérieur de l'enveloppe (4) en une chambre avant à basse pression (6) et en une chambre arrière à pression variable (8), un piston pneumatique (16) d'axe longitudinal monté dans un orifice central (12) de ladite jupe (16), un ressort de rappel (101) du piston pneumatique en position repos étant monté dans la chambre à basse pression (6) entre la première coquille (84) et une plaque annulaire (100) disposée dans la chambre à basse pression sensiblement perpendiculairement à l'axe longitudinal et reliée rigidement au piston pneumatique (16) par des bras axiaux (96) traversant la jupe (10), une valve trois voies actionnée par une tige de commande (2) étant montée dans un passage longitudinal (24) percé dans le piston pneumatique (16), ladite tige de commande étant reliée par une première extrémité longitudinale à une pédale de frein et une deuxième extrémité (50) de ladite tige de commande étant reçue dans une cavité de réception (52) pratiquée dans une première extrémité longitudinale (42) d'un plongeur (44), une deuxième extrémité longitudinale du plongeur opposée à la première extrémité (42) du plongeur étant guidé dans le piston pneumatique, ledit plongeur comportant une surface transversale (56) d'application de l'effort de la tige de commande à un piston d'un maître-cylindre par l'intermédiaire d'un dispositif de réaction (DH, DHR), ladite jupe (10) étant apte à coulisser axialement relativement au piston pneumatique (16) sur une course déterminée (C) dans une première phase d'une action de freinage, ladite jupe (10) transmettant un effort d'assistance pneumatique au piston hydraulique du maître-cylindre par sa partie centrale, **caractérisé en ce que** lorsque la jupe a parcouru ladite course déterminée (C), ladite jupe emporte le piston pneumatique (16) par l'intermédiaire de ladite plaque annulaire (100).

2. Servomoteur selon la revendication précédente **caractérisé en ce que** le piston pneumatique (16) est sensiblement cylindrique et est monté à coulissement étanche dans une cheminée (14) bordant l'orifice centrale (12) de la jupe (10), ladite cheminée étant orientée vers la pédale.

3. Servomoteur selon la revendication 2 **caractérisé en ce que** ladite extrémité longitudinale de la jupe orientée vers la pédale comporte une cheminée de diamètre intérieur sensiblement égal au diamètre extérieur du piston pneumatique (16).

4. Servomoteur selon la revendication 1 à 3 **caractérisé en ce que** la jupe transmet l'effort d'assistance au piston du maître-cylindre par l'intermédiaire d'un élément annulaire (88) en appui contre la jupe, ladite plaque annulaire comportant une première partie radialement externe (90) en appui contre la jupe, une deuxième partie radialement médiane (92) en appui contre une face avant du piston pneumatique (16) et une troisième partie radialement interne (94) en appui contre une queue du piston du maître-cylindre.

5. Servomoteur selon la revendication 4 **caractérisé en ce que** les bras axiaux (96) sont au nombre de quatre répartis angulairement de manière régulière et traversent la jupe par l'intermédiaire de lumières pratiquées dans la deuxième partie médiane (92) du premier élément annulaire (88).

6. Servomoteur selon la revendication 3 ou 4 **caractérisé en ce qu**'un moyen élastique (104)est monté entre la première partie radialement externe (90) de l'élément annulaire et la plaque annulaire.

7. Servomoteur selon la revendication précédente **caractérisé en ce que** ledit moyen élastique est un ressort hélicoïdal tronconique dont la base de plus grand diamètre est en appui sur la plaque annulaire (100).

8. Servomoteur selon la revendication précédente **caractérisé en ce qu**'une gorge annulaire est prévue dans la plaque annulaire (100) pour recevoir l'extrémité de plus grand diamètre du ressort tronconique (104).

9. Servomoteur selon l'une quelconque des revendications de 4 à 8 **caractérisé en ce que** la troisième partie centrale (94) de l'élément annulaire (88) est de forme tubulaire (108) d'axe X et s'étend en direction du maître-cylindre et **en ce que** ladite queue de piston comporte une cavité (106) munie d'un fond dans laquelle vient en appui une extrémité (110) de la troisième partie centrale (94) du premier élément annulaire de forme tubulaire.

10. Servomoteur selon la revendication précédente **caractérisé en ce que** une extrémité du tube (108) en appui contre le fond de la cavité (106) est conformée en rotule.

11. Servomoteur selon l'une quelconque des revendications précédentes **caractérisé en ce que** l'étanchéité entre la paroi extérieure du piston pneumatique (16) et la jupe est réalisée par un joint torique monté dans une gorge pratiquée dans la paroi du piston pneumatique (16).

12. Servomoteur selon l'une quelconque des revendications précédentes **caractérisé en ce que** le plongeur est guidé axialement dans le piston pneumatique (16) par un rétrécissement annulaire (60) formé dans la paroi intérieure du piston pneumatique (16).

13. Servomoteur selon l'une quelconque des revendications précédentes **caractérisé en ce que** le dispositif de réaction (DH, DHR) comporte un élément flottant interposé entre une deuxième extrémité longitudinale (54) du plongeur (44) et un piston d'un maître-cylindre.

14. Servomoteur selon la revendication précédente **caractérisé en ce que** le dispositif de réaction (DH) comporte également une cage d'extension (79) longitudinale maximale dans laquelle est monté un moyen élastique (67) monté en réaction entre un anneau (71) en appui contre une portée annulaire (74) de l'élément flottant et une bague (76) monté dans un cavité annulaire (77) pratiquée dans le piston pneumatique (16), ladite bague (76) comportant un orifice pour le passage d'une extrémité longitudinale de l'élément flottant, ladite bague (76) et ledit anneau (71) étant reliés par un manchon (81) dans lequel l'anneau (71) est apte à coulisser en direction du plongeur.

15. Servomoteur selon la revendication 13 **caractérisé en ce que** le dispositif de réaction (DHR) comporte également un disque de réaction (114) disposé dans une chambre (70) recevant la deuxième extrémité longitudinale (54) du plongeur (44) en appui par une partie radialement externe (116) d'une première face contre le piston pneumatique (16) et par une deuxième face contre une face formant une première extrémité dudit élément flottant, ladite face étant porté par un disque solidaire de l'élément flottant (58) et **en ce qu'**un jeu est prévu entre le disque rigide (66) est une deuxième partie centrale (118) du disque de réaction (114).

16. Servomoteur selon l'une quelconque des revendications précédentes **caractérisé en ce qu'**une membrane d'étanchéité annulaire (82) est d'une part pincée entre la première et la deuxième coquilles (84,86) et d'autre part surmoulée sur une extrémité radialement externe de la jupe (10).

17. Dispositif de freinage comportant un maître-cylindre raccordé de manière hydraulique à des freins disposés au niveau de roues d'un véhicule automobile et un servomoteur interposé entre le maître-cylindre et une tige de commande déplacé au moyen d'une pédale de frein, ledit servomoteur transmettant un effort appliqué à la pédale et appliquant un effort d'assistance pneumatique à un piston du maître-cylindre **caractérisé en ce que** ledit servomoteur est un servomoteur selon l'une quelconque des revendications précédentes.

## Claims

1. Pneumatic brake booster comprising a casing (4) of longitudinal axis (X) formed by first and second shells (84, 86) connected by their radially external ends, in which casing a skirt (10) of longitudinal axis (X) is slidably mounted with sealing, said skirt dividing the interior space of the casing (4) into a low-pressure front chamber (6) and into a variable-pressure rear chamber (8), a pneumatic piston (16) of longitudinal axis mounted in a central orifice (12) in said skirt (16), a return spring (101) for returning the pneumatic piston to the rest position being mounted in the low-pressure chamber (6) between the first shell (84) and an annular plate (100) which is arranged in the low-pressure chamber substantially perpendicularly to the longitudinal axis and is connected rigidly to the pneumatic piston (16) by axial arms (96) passing through the skirt (10), a three-way valve actuated by a control rod (2) being mounted in a longitudinal passage (24) bored into the pneumatic piston (16), said control rod being connected by a first longitudinal end to a brake pedal and a second end (50) of said control rod being received in a receiving cavity (52) made in a first longitudinal end (42) of a plunger (44), a second longitudinal end of the plunger opposite the first end (42) of the plunger being guided in the pneumatic piston, said plunger comprising a transverse surface (56) for applying the force of the control rod to a piston of a master cylinder by way of a reaction device (DH, DHR), said skirt (10) being able to slide axially relative to the pneumatic piston (16) over a defined travel (C) in a first phase of a braking action, said skirt (10) transmitting a pneumatic boost force to the hydraulic piston of the master cylinder via its central part, **characterized in that** when the skirt has completed said defined travel (C), said skirt takes the pneumatic piston (16) along with it by way of said annular plate (100).

2. Booster according to the preceding claim, **characterized in that** the pneumatic piston (16) is substantially cylindrical and is slidably mounted with sealing in a hollow shaft (14) bordering the central orifice (12) in the skirt (10), said hollow shaft being directed toward the pedal.

3. Booster according to Claim 2, **characterized in that** said longitudinal end of the skirt directed toward the pedal comprises a hollow shaft whose inside diameter is substantially equal to the outside diameter of the pneumatic piston (16).

4. Booster according to Claims 1 to 3, **characterized in that** the skirt transmits the booster force to the master cylinder piston by way of an annular element (88) bearing against the skirt and carried along by said skirt upon a braking action, comprising a radially external first part (90) bearing against a front face of the piston (16), a radially central second part (92) bearing against the front face of the piston (16), and a radially internal third part (94) bearing against a tail of the master cylinder piston.

5. Booster according to Claim 4, **characterized in that** there are four axial arms (96) which are angularly distributed in a uniform manner and pass through the skirt by way of openings made in the second central part (92) of the annular first element (88).

6. Booster according to Claim 3 or 4, **characterized in that** an elastic means (104) is mounted between the radially external first part (90) of the annular element and the annular plate.

7. Booster according to the preceding claim, **characterized in that** said elastic means is a frustoconical helical spring whose larger-diameter base bears on the annular plate (100).

8. Booster according to the preceding claim, **characterized in that** an annular groove is provided in the annular plate (100) to receive the larger-diameter end of the frustoconical spring (104).

9. Booster according to any one of Claims.4 to 8, **characterized in that** the central third part (94) of the annular element (88) has a tubular shape (108) of axis X and extends in the direction of the master cylinder, and **in that** said piston tail comprises a cavity (106) provided with an end wall and in which there bears an end (110) of the central third part (94) of the annular first element of tubular shape.

10. Booster according to the preceding claim, **characterized in that** an end of the tube (108) bearing against the end wall of the cavity (106) is configured as a ball.

11. Booster according to any one of the preceding claims, **characterized in that** sealing between the outer wall of the pneumatic piston (16) and the skirt is performed by an 0-ring mounted in a groove made in the wall of the pneumatic piston (16).

12. Booster according to any one of the preceding claims, **characterized in that** the plunger is guided axially in the pneumatic piston (16) by an annular throat (60) formed in the inner wall of the pneumatic piston (16).

13. Booster according to any one of the preceding claims, **characterized in that** the reaction device (DH, DHR) comprises a floating element interposed between a second longitudinal end (54) of the plunger (44) and a master cylinder piston.

14. Booster according to the preceding claim, **characterized in that** the reaction device (DH) also comprises a cage (79) of maximum longitudinal extension in which there is mounted an elastic means (67) mounted in reaction between a ring (71) bearing against an annular bearing surface (74) of the floating element and a collar (76) mounted in an annular cavity (77) made in the pneumatic piston (16), said collar (76) comprising an orifice for the passage of a longitudinal end of the floating element, said collar (76) and said ring (71) being connected by a sleeve (81) in which the ring (71) is able to slide in the direction of the plunger.

15. Booster according to Claim 13, **characterized in that** the reaction device (DHR) also comprises a reaction disk (114) arranged in a chamber (70) receiving the second longitudinal end (54) of the plunger (44), said reaction disk bearing by a radially external part (116) of a first face against the pneumatic piston (16) and by a second face against a face forming a first end of said floating element, said face being borne by a disk secured to the floating element (58), and **in that** a clearance is provided between the rigid disk (66) and a central second part (118) of the reaction disk (114).

16. Booster according to any one of the preceding claims, **characterized in that** an annular sealing diaphragm (82) is on the one hand clamped between the first and second shells (84, 86) and on the other hand overmolded onto a radially external end of the skirt (10).

17. Braking device comprising a master cylinder connected hydraulically to brakes arranged at the wheels of a motor vehicle, and a booster interposed between the master cylinder and a control rod moved by means of a brake pedal, said booster transmitting a force applied to the brake pedal and applying a pneumatic boost force to a piston of the master cylinder, **characterized in that** said booster is a booster according to any one of the preceding claims.

## Patentansprüche

1. Pneumatischer Servomotor zur Bremsunterstützung, mit einem Gehäuse (4) mit der Längsachse (X), das durch eine erste und eine zweite Schale (84, 86) gebildet ist, welche über ihre radial äußeren Enden miteinander verbunden sind, und in dem eine Schürze (10) mit der Längsachse (X) in dichter Weise gleitend angebracht ist, wobei die Schürze den Innenraum des Gehäuses (4) in eine vordere Kammer (6) mit niedrigem Druck und in eine hintere Kammer (8) mit variablem Druck unterteilt, wobei ein pneumatischer Kolben (16) mit einer Längsachse in einer mittleren Öffnung (12) der Schürze (10) angebracht ist, wobei eine Feder (101) zum Zurückstellen des pneumatischen Kolbens in die Ruhestellung in der Niederdruckkammer (6) zwischen der ersten Schale (84) und einer ringförmigen Platte (100) angebracht ist, welche in der Niederdruckkammer im Wesentlichen senkrecht zur Längsachse angeordnet und durch axiale, die Schürze (10) durchquerende Arme (96) starr mit dem pneumatischen Kolben (16) verbunden ist, wobei ein von einer Steuerstange (2) betätigtes Dreiwegeventil in einem Längsdurchgang (24) angebracht ist, der durch den pneumatischen Kolben (16) hindurch verläuft, wobei die Steuerstange über ein erstes Längsende mit einem Bremspedal verbunden ist und ein zweites Ende (50) der Steuerstange in einer in einem ersten Längsende (42) eines Tauchkolbens (44) ausgebildeten Aufnahmevertiefung (52) aufgenommen ist, wobei ein zweites Längsende des Tauchkolbens, das dem ersten Ende (42) des Tauchkolbens entgegengesetzt ist, im pneumatischen Kolben geführt ist, wobei der Tauchkolben eine Querfläche (56) zum Aufbringen der von der Steuerstange ausgeübten Kraft auf einen Kolben eines Hauptzylinders mittels einer Reaktionsvorrichtung (DH, DHR) aufweist, wobei die Schürze (10) in einer ersten Phase eines Bremsvorgangs über einen vorbestimmten Weg (C) bezüglich des pneumatischen Kolbens (16) axial gleiten kann, und wobei die Schürze (10) über ihren Mittelabschnitt eine pneumatische Unterstützungskraft zum hydraulischen Kolben des Hauptzylinders überträgt, **dadurch gekennzeichnet, dass** die Schürze mittels der ringförmigen Platte (100) den pneumatischen Kolben (16) mitnimmt, wenn die Schürze den vorbestimmten Weg (C) zurückgelegt hat.

2. Servomotor nach dem vorhergehenden Anspruch, **dadurch gekennzeichnet, dass** der pneumatische Kolben (16) im Wesentlichen zylindrisch und in dichter Weise gleitend in einem Schacht (14) angebracht ist, der die mittlere Öffnung (12) der Schürze (10) umrandet, wobei der Schacht zum Pedal gerichtet ist.

3. Servomotor nach Anspruch 2, **dadurch gekennzeichnet, dass** das zum Pedal gerichtete Längsende der Schürze einen Schacht mit einem Innendurchmesser aufweist, der im Wesentlichen dem Außendurchmesser des pneumatischen Kolbens (16) entspricht.

4. Servomotor nach den Ansprüchen 1 bis 3, **dadurch gekennzeichnet, dass** die Schürze die Unterstützungskraft mittels eines an der Schürze anliegenden ringförmigen Elements (88) zum Kolben des Hauptzylinders überträgt, wobei die ringförmige Platte einen ersten, radial äußeren Abschnitt (90), der an der Schürze anliegt, einen zweiten, radial zwischenliegenden Abschnitt (92), der an einer vorderen Fläche des pneumatischen Kolbens (16) anliegt, und einen dritten, radial inneren Abschnitt (94) aufweist, der an einem Endstück des Hauptzylinderkolbens anliegt.

5. Servomotor nach Anspruch 4, **dadurch gekennzeichnet, dass** vier axiale Arme (96) vorhanden sind, die winkelmäßig gleichmäßig verteilt sind und die Schürze durch Schlitze durchqueren, die im zweiten, zwischenliegenden Abschnitt (92) des ersten ringförmigen Elements (88) ausgebildet sind.

6. Servomotor nach Anspruch 3 oder 4, **dadurch gekennzeichnet, dass** ein elastisches Mittel (104) zwischen dem ersten, radial äußeren Abschnitt (90) des ringförmigen Elements und der ringförmigen Platte angebracht ist.

7. Servomotor nach dem vorhergehenden Anspruch, **dadurch gekennzeichnet, dass** das elastische Mittel eine kegelstumpfartige Schraubenfeder ist, deren Basis mit dem größeren Durchmesser an der ringförmigen Platte (100) anliegt.

8. Servomotor nach dem vorhergehenden Anspruch, **dadurch gekennzeichnet, dass** in der ringförmigen Platte (100) eine ringförmige Nut für die Aufnahme des Endes mit dem größeren Durchmesser der kegelstumpfartigen Feder (104) vorgesehen ist.

9. Servomotor nach einem der Ansprüche 4 bis 8, **dadurch gekennzeichnet, dass** der dritte, mittlere Abschnitt (94) des ringförmigen Elements (88) die Form eines Rohrs (108) mit der Achse (X) besitzt und sich zum Hauptzylinder hin erstreckt, und dass das Endstück des Kolbens eine mit einem Boden versehene Vertiefung (106) aufweist, in die ein Ende (110) des dritten, mittleren Abschnitts (94) des ersten ringförmigen Elements in Form eines Rohrs in Anlage gelangt.

10. Servomotor nach dem vorhergehenden Anspruch, **dadurch gekennzeichnet, dass** ein Ende des Rohrs (108), das am Boden der Vertiefung (106) anliegt, als Kugelgelenk ausgebildet ist.

11. Servomotor nach einem der vorhergehenden Ansprüche, **dadurch gekennzeichnet, dass** die Dichtigkeit zwischen der Außenwand des pneumatischen Kolbens (16) und der Schürze durch eine torische Dichtung realisiert ist, die in einer in der Wand des pneumatischen Kolbens (16) ausgebildeten Nut angebracht ist.

12. Servomotor nach einem der vorhergehenden Ansprüche, **dadurch gekennzeichnet, dass** der Tauchkolben durch eine ringförmige Verengung (60), die in der Innenwand des pneumatischen Kolbens (16) ausgebildet ist, im pneumatischen Kolben (16) axial geführt ist.

13. Servomotor nach einem der vorhergehenden Ansprüche, **dadurch gekennzeichnet, dass** die Reaktionsvorrichtung (DH, DHR) ein Schwimmelement aufweist, das zwischen einem zweiten Längsende (54) des Tauchkolbens (44) und einem Kolben eines Hauptzylinders angeordnet ist.

14. Servomotor nach dem vorhergehenden Anspruch, **dadurch gekennzeichnet, dass** die Reaktionsvorrichtung (DH) auch einen Halter (79) mit maximaler Längserstreckung aufweist, in dem ein elastisches Mittel (67) angebracht ist, das zwischen einem Ring (71), der an einer ringförmigen Auflagefläche (74) des Schwimmelements anliegt, und einem Reifen (76) wirkend angebracht ist, welcher in einer ringförmigen Vertiefung (77), die im pneumatischen Kolben (16) ausgebildet ist, angebracht ist, wobei der Reifen (76) eine Öffnung für das Durchführen eines Längsendes des Schwimmelements aufweist und der Reifen (76) und der Ring (71) über eine Muffe (81) verbunden sind, in welcher der Ring (71) zum Tauchkolben hin gleiten kann.

15. Servomotor nach Anspruch 13, **dadurch gekennzeichnet, dass** die Reaktionsvorrichtung (DHR) auch eine Reaktionsscheibe (114) aufweist, die in einer Kammer (70), die das zweite Längsende (54) des Tauchkolbens (44) aufnimmt, so angeordnet ist, dass sie über einen radial äußeren Abschnitt (116) einer ersten Fläche am pneumatischen Kolben (16) und über eine zweite Fläche an einer Fläche anliegt, die ein erstes Ende des Schwimmelements bildet, wobei die Fläche von einer mit dem Schwimmelement (58) fest verbundenen Scheibe getragen ist, und dass zwischen der starren Scheibe (66) und einem zweiten, mittleren Abschnitt (118) der Reaktionsscheibe (114) ein Spiel vorgesehen ist.

16. Servomotor nach einem der vorhergehenden Ansprüche, **dadurch gekennzeichnet, dass** eine ringförmige Dichtungsmembran (82) einerseits zwischen der ersten und der zweiten Schale (84, 86) geklemmt und andererseits auf ein radial äußeres Ende der Schürze (10) aufgeformt ist.

17. Bremsvorrichtung mit einem Hauptzylinder, der hydraulisch mit Bremsen verbunden ist, die auf Höhe der Räder eines Kraftfahrzeugs angeordnet sind, und mit einem Servomotor, der zwischen dem Hauptzylinder und einer Steuerstange angeordnet ist, die mittels eines Bremspedals verlagert wird, wobei der Servomotor eine auf das Pedal aufgebrachte Kraft überträgt und eine pneumatische Unterstützungskraft auf einen Kolben des Hauptzylinders aufbringt, **dadurch gekennzeichnet, dass** der Servomotor ein Servomotor nach einem der vorhergehenden Ansprüche ist.
